# EUROPEAN PATENT SPECIFICATION

(11) **EP 2 818 206 B1**
(45) Date of publication and mention of the grant of the patent: **22.11.2017**
(21) Application number: 13173927.8
(22) Date of filing: 27.06.2013
(51) Int. Cl.: A62B 25/00, B64D 11/00

(54) **Aircraft oxygen emergency apparatus with quick release box**
Flugzeug-Sauerstoffnotfallvorrichtung mit Schnellauslösekasten
Appareil d'urgence d'oxygène d'aéronef avec boîte à libération rapide

(43) Date of publication of application: 31.12.2014
(73) Proprietor: Zodiac Aerotechnics, 78370 Plaisir (FR)
(72) Inventor: Hollm, Marco, 25548 Rosdorf (DE); Weinmann, Hasso, 23564 Lübeck (DE); Westphal, Andreas, 23701 Eutin (DE); Rittner, Wolfgang, 23623 Ahrensbök (DE); Meckes, Rüdiger, 23919 Berkenthin (DE); Hoffmann, Frederik, 23617 Stockelsdorf (DE); Ducos, Romain, 23617 Stockelsdorf (DE); Boomgaarden, Günter, 23684 Scharbeutz (DE); Fleczok, Benjamin, 23617 Stockelsdorf (DE)
(74) Representative: Cabinet Plasseraud

(56) References cited:
- US-A- 3 635 511
- US-A- 3 658 370
- US-A- 4 111 473
- US-A- 4 428 607
- US-A- 5 244 239
- US-A- 5 253 907

## Description

The invention relates to an emergency oxygen supply device for aircraft inhabitants, comprising an oxygen source, an oxygen mask connected via an oxygen line to said oxygen source, a container, wherein said oxygen mask is positioned inside said container, a releasable cover lid mounted to the container to close an opening of said container in a first position of said cover lid and to open said opening in a second position, a latch mechanism mounted to said container, said latch mechanism comprising a latch which is switchable from a first position wherein said latch holds said cover lid in the closed position to a second position wherein said latch gives free the cover lid to move into the open position.

Emergency oxygen supply devices are required and prescribed for any aircraft used to transport passengers in high altitudes to allow supply of oxygen to a passenger in a decompression situation. Usually, such emergency oxygen devices comprise an oxygen source like a chemical oxygen generator or a pressurized oxygen tank which is coupled to a single or a plurality of oxygen masks via a valve controlled by a control unit.

In regular flight condition the oxygen masks usually are stored above the passenger in a ceiling compartment. This ceiling compartment may be the container explained beforehand or maybe adapted to take up a separate container wherein the oxygen masks are stored. In case of an emergency situation a cover lid of said container opens and the oxygen masks drop out of the container and are provided to the passenger. The oxygen masks stay connected with the oxygen source inside said container via a flexible hose or tube or the like supplying the oxygen from said oxygen source to the oxygen masks or by an additional line or tether holding the oxygen masks at a predetermined level below the container. This allows easy grasping of the oxygen mask by the passenger in an emergency situation.
A general problem with such emergency oxygen supply devices is a safe release of the oxygen masks out of the container in an emergency situation. A plurality of adverse effects may occur in an emergency situation which may hinder such safe release. For example, heat or vibration may be present in the cabin and may thus influence a mechanical interaction of the cover lid with the latch mechanism. It is a first aspect of the invention to provide an emergency oxygen supply device which improves the safety and reliability of the release of the oxygen masks out of the container.
A further problem associated with the safe release is the aspect of energy supply in an emergency situation. Whereas on board of an aircraft a number of redundant energy sources are present to ensure a certain level of supply of energy even in emergency situations it is desired to reduce the consumption of such energy in an emergency situation to a minimum to not endanger important flight control functionality of the aircraft out of said energy sources. It is a further desire to reduce the overall energy consumption of peripheral devices on board of the aircraft in regular flight conditions, too. A second aspect of the invention is to provide an emergency oxygen supply device which provides a safe release of the oxygen masks under reduced energy consumption in regular flight conditions and in an emergency situation.

An example of an aircraft emergency oxygen supply apparatus that solves these problems, and represents the basis for the two-part form, can be found in US5244239. This apparatus however does not allow simple resetting of the lid without using additional tools once the the latch has been unlocked.

According to the invention, an emergency oxygen supply device according to the introductory portion is provided, wherein said latch mechanism comprises a permanent magnet interacting with a magnetisable element an exerting a magnetic holding force onto said magnetisable element to hold said latch in the first position, wherein a solenoid is positioned adjacent to the permanent magnet, said solenoid being connected to a control unit said control unit being adapted to receive an opening signal and to provide a curent flowing through said solenoid in response to such opening signal, wherein said solenoid is arranged and dimensioned such that the current flowing through said solenoid reduces said magnetic holding force to such a level that the latch is released in the second position.

The latch mechanism according to the invention comprises a permanent magnet holding the latch in the first position, i.e. the position blocking the cover lid in the closed position. By using a permanent magnet the latch mechanism does not consume any energy in this closed position and thus is optimized for regular flight conditions with regard to energy consumption.

In an emergency situation a solenoid which is arranged adjacent to the permanent magnet, e.g. wound around the permanent magnet, is supplied with current. By this, the holding force of the permanent magnet is reduced or even eliminated and thus the latch is not fixed in the first position anymore. The current supplied to the solenoid can be rather low and short since it is only required to reduce the holding force to a level wherein the latch moves out of the first towards the second position to allow the cover lid to open. A main advantage of the design according to the invention is the option to preload the latch with a significant force which forces the latch from the first to the second position. This preload may be effected by the weight of the cover lid and the oxygen masks lying on the cover lid onto the latch. This force is compensated and countered by the holding force of the permanent magnet. By providing such preload a rather small current is required to reduce the holding force to such a level that the latch moves from the first position to the second position. As soon as the latch has moved a small distance out of the first position the holding force of the permanent magnet is reduced significantly due to the correlation between magnetic force and distance from the permanent magnet.

It is preferred that the magnetisable element is in direct contact to the permanent magnet in the first position of the latch to maximize the holding force at this zero distance between the magnetisable element and the permanent magnet. In such case, the holding force of the permanent magnet is reduced significantly in the small first distance of travel of the latch from the first to the second position and thus a small and short peak current is required for releasing the oxygen masks only.

According to the invention the latch further comprises a locking element with two legs which delimit a recess. The lower of the two legs has a bottom face which is oriented oblique to the direction of movement of the cover lid for providing a wedge-like effect onto a locking lever. The locking lever itself is pivotally mounted to a projection which is integral with the cover lid. A spiral spring is arranged around the pivotal coupling to force the locking lever in a clockwise direction.

According to the invention a reset pin is further connected to the cover lid. The reset pin extends from the cover lid in a direction towards the latch. The upper end of the reset pin is arranged opposite to a reset face of the latch for coming into contact with the reset face of the latch if the latch is in the second unlocking position and the cover lid is pushed into the closed position for thereby moving the latch from the second unlocking position into the first locking position if the cover lid is moved from the open position into a closed position.

According to a first preferred embodiment said permanent magnet and said solenoid is fixed to a wall of said container and said magnetisable element is fixed to said latch. This arrangement allows to design the latch with a low weight and mass inertia and to thus facilitate quick release of the latch by its movement.
It is further preferred that said latch is mounted swivable to said container. This swivable mounting of the latch to the container is to be understood as a mounting of the latch to the container lid or to a wall of said container which is adapted to be mounted immovable to a ceiling compartment of an aircraft. The swivable mounting may be achieved by a bearing, a joint or the like defining a geometrical axis of the swivel movement by a design element like an axis or a shaft. Further, the swivel mounting of the latch may be accomplished by an elastic mounting wherein a deformation of the latch or a mounting component of said latch allows the swivel movement. In such elastic swivel mounting no specific component defining an axis may be present but the swivel movement is provided by a reversible elastic deformation of a smaller or larger region of the latch or the mounting component.
It is to be understood that the latch may be dimensioned and designed in such a way that instead of a swivel movement a translational movement between the first and the second position or any other geometrical may be present.
According to a further preferred embodiment said latch comprises a recess or a projection interacting with a section of the cover lid in the closed position to hold said cover lid in the closed position, said recess or projection being positioned such that an opening force is applied to said latch forcing said latch into the second position by the force of gravity exerted by the cover lid onto said latch in the closed position, wherein said holding force holds the latch in said first position against said force of gravity. This preferred embodiment may preferably be used to allow closing of the cover lid if the latch is in the first position wherein said latch then holds the cover lid in the closed position after moving the cover lid from the opened to the closed position. Further, the latch may be designed in such a way that it cannot be reached from outside the container to make sure that no unintended release of the latch takes place or the releasing of the latch may be hindered by any components delimiting the movement of the latch from outside.

It is further preferred that said latch comprises a lever and said magnetisable element is mounted to said lever. Such a lever is to be understood as a separate element or an integral part of the latch extending from a real or virtual axis defining a pivot movement of the latch including the lever. The lever allows to safely hold the latch in the first position and to define a distinct holding and releasing force to provide safe release of the cover lid in an emergency situation.

It is further preferred that said latch mechanism comprises a spring exerting a spring force onto said lever forcing said lever into the second position, wherein said holding force holds the latch in said first position against said spring force. By providing such a spring the movement of the latch from the first into the second position is supported facilitating a safe release of the latch in an emergency situation even under conditions like heavy vibration or deformation as a consequence of heat or impact. The spring may be a spiral spring, a coil spring, a helical spring or any other type of spring like e.g. a deformable elastic element made of a polymeric or elastomeric material or the like. Said spring may preferably act onto a lever as explained in the embodiment beforehand.

It is further preferred that the oxygen supply device according to the invention further comprises a switch which is actuated by the cover lid in the open position or the latch in the second position, wherein said switch interrupts the current flow through said solenoid if said switch is actuated. Such a switch will ensure that the current flowing through the solenoid is only activated for a short-time interval and thus significantly reduces the energy consumption of the oxygen supply device in an emergency situation. The switch may preferably be positioned in such a way that it interrupts the current flow through the solenoid as soon as the latch has reached a position in distance to the first position wherein said distance between the magnetisable element and the permanent magnet is sufficient to allow the latch to further move into the second position even if the magnetic force of the permanent magnet is fully present after again the solenoid is no longer supplied with current. This will further reduce the time interval of current supply to the solenoid and thus will help reducing the energy consumption in an emergency situation.
A further aspect of the invention is a method of providing oxygen to passenger of an aircraft comprising the steps: storing oxygen masks in a container above the passenger seat, said container comprising a cover lid holding said oxygen mask in said container in a closed position, wherein said cover lid is hold in said closed position by a latch in a first position, releasing said oxygen mask out of said container by moving said latch in a second position, wherein said cover lid is no longer held in the closed position and moves into an open position wherein said latch is hold in said first position by holding force exerted by a permanent magnet to a magnetisable element mounted to said latch and said latch is moved into the second position by supplying a current to a solenoid and thereby reducing or eliminating the holding force of said permanent
This method is particularly preferred to be conducted using an oxygen supply device as explained beforehand and is directly related to the design of such oxygen supply device according to the invention. It is to be understood that the specific details and functionalities of this method are directly related to the details and functionality of the oxygen supply device explained beforehand and so far reference is made to this part of the description. Further, it is to be understood that the method may be further improved by method steps corresponding to the functional properties of the oxygen supply device explained beforehand as preferred embodiments of said device.
A preferred embodiment of the invention is explained below with reference to the figures. In the figures:
Figure 1 shows a schematical side view of a first illustrative example which is not part of the invention in a closed position of a cover lid,
Figure 2 shows a view according to figure 1 of the same example in an opened condition,
Figure 3 shows a view according to figure 1 of a second illustrative example, which is not part of the invention.
Figure 4 - 6 show a view according to figure 1 of a third illustrative example, which is not part of the invention, in a sequence from an open to a closed position of the cover lid, and
Figure 7 shows a view according to figure 1 of an embodiment of the invention.

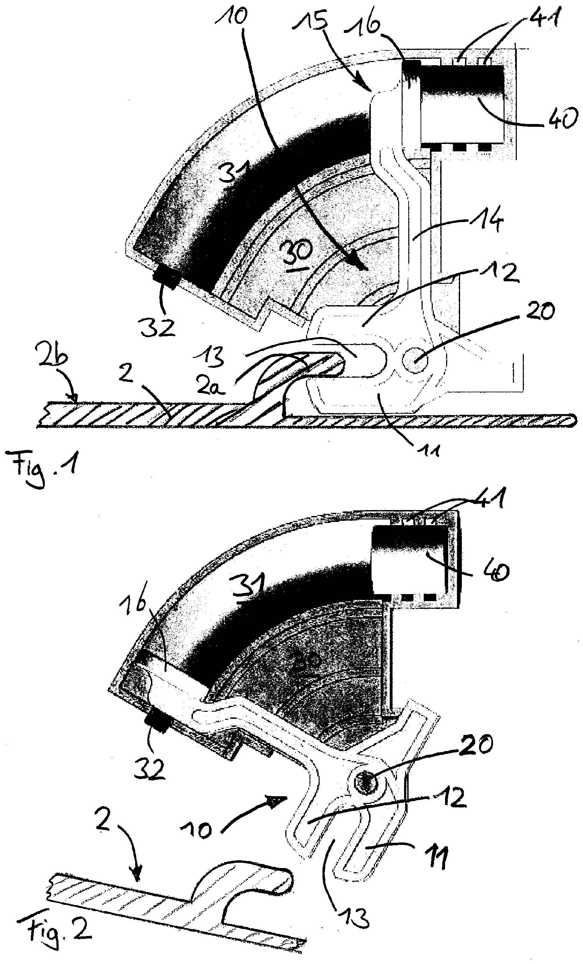

Referring first to figures 1 and 2 a latch mechanism 1 is shown which interacts with a cover lid 2.
The latch mechanism 1 comprises a latch 10 which is pivoted around an axis 20. The latch 10 comprises a locking element with two legs 11, 12 which delimit a recess 13. Further, a lever 14 is part of the latch and integral with the legs 11, 12. The lever 14 extends in a perpendicular direction in relation to the legs 11, 12.
The lever 14 extends from the axis 20 to an outer end 15. A metal plate 16 is attached to said end 15 of the lever, said metal plate 16 having a cylindrical shape.
As can be seen in comparison to figures 1 and 2, the metal plate 16 can move on a curved path in a groove 31 which is part of a frame 30 to which the axis 20 is attached.
A permanent magnet 40 is attached to the frame 30 by an insert moulding process and thereby fixed in the frame 30. Said permanent magnet 40 interacts with the metal plate 16 of the lever 14. In a first locking position of the latch 10 the metal plate 16 is in direct contact with said permanent magnet 40 and is held in position by a holding force applied by said permanent magnet on said metal plate 16. It is to be understood that said metal plate is made from a magnetisable metal.

A solenoid 41 is wound around the permanent magnet 40 and held in place by insert moulding inside said frame 30. Said solenoid is connected to a control unit (not shown) via wires allowing to supply a current to said solenoid under the control of said control unit.

The cover lid comprises a projection 2a which is locked in a form locking interaction in the recess between the legs 11, 12 of the latch 10. This locking condition is shown in figure 1. In this figure, the cover lid 2 is held in the closed position.

If the solenoid 41 is supplied with current the magnetic field of the permanent magnet is reduced or eliminated and thus the holding force between the permanent magnet 40 and the metal plate 16 is reduced. The weight of the cover lid 2 and the weight of oxygen masks lying on the upper surface 2b of the cover lid 2 applies a torque onto the latch 10 around the axis 20. This torque results in a swivel movement of the latch 10 from the first locking position in figure 1 to the second unlocking position as shown in figure 2. In the course of this movement of the latch 10 from the locking position to the unlocking position the form-locking effect between the projection 2a of the cover lid 2 and the recess 13 of the latch 10 is eliminated and the cover lid 2 may open by a movement like a swivel movement or a translational movement to allow the oxygen masks to drop out of their position inside a container which is closed by said cover lid 2. This condition is shown in figure 2. It is to be understood that the current supplied to the solenoid may only be a short peak current since as soon as a distance between the permanent magnet 40 and the metal plate 16 is present the permanent magnet 40 will no longer induce a holding force sufficient to hold the latch in the position shown in figure 1.

A switch 32 is arranged at the end of the pathway 31 opposed to the permanent magnet 40. Said switch 32 is activated by the end 15 of the lever 14 and is coupled to the control unit (not shown) to interrupt the supply of current to the solenoid 41 if the switch is activated. By this, the time interval of supply of current to the solenoid is minimized to a short-time period sufficient to ensure a safe release of the cover lid 2.

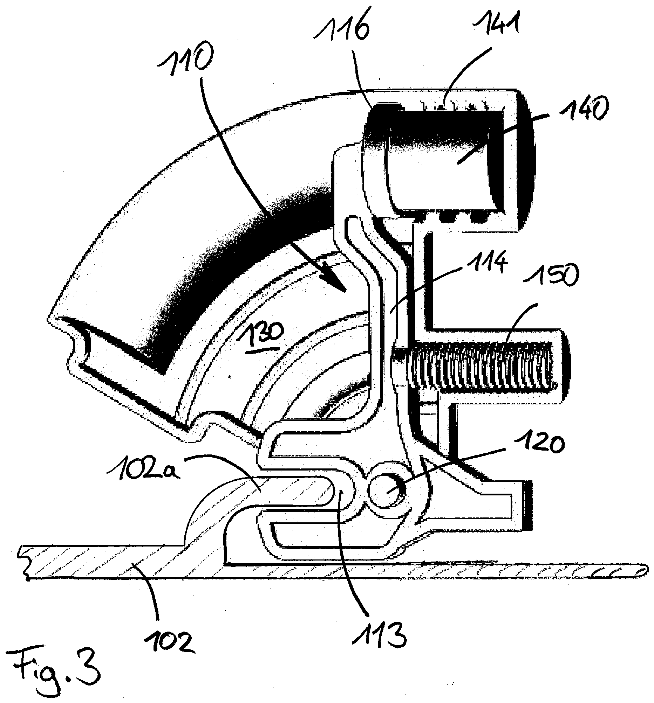

Figure 3 shows a second illustrative example, which is not part of the invention. In this example a latch 110 which is held by a permanent magnet 140 with solenoid 141 in a first locking position to hold a cover lid 102 is shown, the characteristics of this latch mechanism being identical with the characteristics of the latch mechanism described beforehand with reference to figures 1 and 2.

Corresponding elements in figure 3 are numbered under addition of 100 to the reference number in figure 1. The latch mechanism shown in figure 3 differs from the example shown in figures 1, 2 in such a way that a coil spring 150 is provided which is arranged in a recess integral with the frame 130. The coil spring applies a compressive force onto the lever 114 of the latch 110. Said compressive force acts against the holding force applied by the permanent magnet 140 onto the metal plate 116 of the latch 110. By this compressive force the swivel movement of the latch after supply of current to the solenoid 141 is supported and forced resulting in a quick release action of the cover lid after current supply to the solenoid 141. Thus, the example shown in figure 3 will provide a quicker release and is less prone to be blocked by deformations or any further impacts onto the projection of the cover lid or the latch mechanism resulting from any outer influence which may occur in an emergency situation.

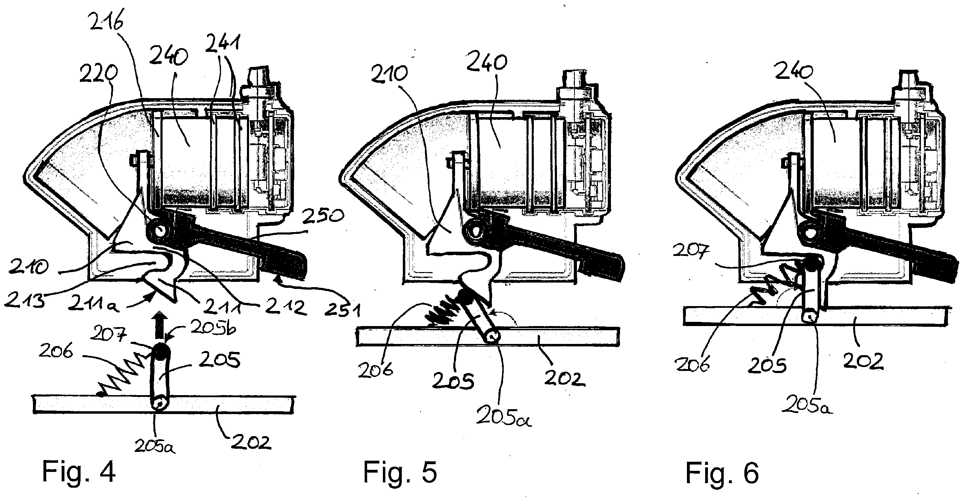

Figures 4-6 show a third example of a latch mechanism, which is also not part of the invention. Like the first and second examples this third example comprises a permanent magnet 240 holding a metal plate 216 which is connected to a latch 210. As can be seen, the latch 210 is pivoted around an axis 220 to pivot between a first locking position and a second unlocking position.

The movement between said first locking position and said second unlocking position is actuated by the permanent magnet 240 and a solenoid 241 wound around said permanent magnet. It is to be noted that figures 4-6 show said latch 210 in the first locking position only.

The third example shown in figures 4-6 differs from the first and the second example by an indicator lever 250. Said indicator lever 250 is pivoted around axis 220 and comprises an indicator face 251 at an end opposite to the axis 220. If the latch 210 moves from the first locking position to the second unlocking position this will effect a counter-clockwise rotation of the indicator lever 250 thus lifting the indicator face 251 to a raised position. By this, it can be seen from outside whether said indicator face 251 is in the down position or the raised position indicating the latch 210 to be in the first locking position or the second unlocking position, respectively.

A further difference between the first and second examples and this third example lies in the geometry of the latch in the region of the legs 211, 212 and the recess 213 acting to hold the cover lid 202. As can be seen from the figures, the lower leg 211 has a bottom face 211a which is oriented oblique to the direction of movement of the cover lid. This sloping face 211a provides a wedge-like effect onto a locking lever 205 which is coupled to the cover 202.

Said locking lever 205 is pivoted around an axis 205a and coupled via this axis 205a to the cover lid 202. A compressive spring 206 is provided pushing said locking lever 205 into the upright position shown in figures 4 and 6. If the cover lid is raised from the open position shown in figure 4 the upper end 205b of the locking lever 205 comes into contact with the wedge-shaped face 211a of the latch 210. By this, the locking lever 205 is rotated counter-clockwise as shown in figure 5. When further lifting the cover lid 202 a locking bolt 207 at the upper end of the locking lever 205 moves into the recess 213 by a reverse movement in a clockwise direction of the locking lever 205. This reverse movement is pushed by the compressive spring 206.

As can be seen the third example allows closing of the cover lid even if the latch is in the first locking position by said particular pivotal movement of the locking lever 205.

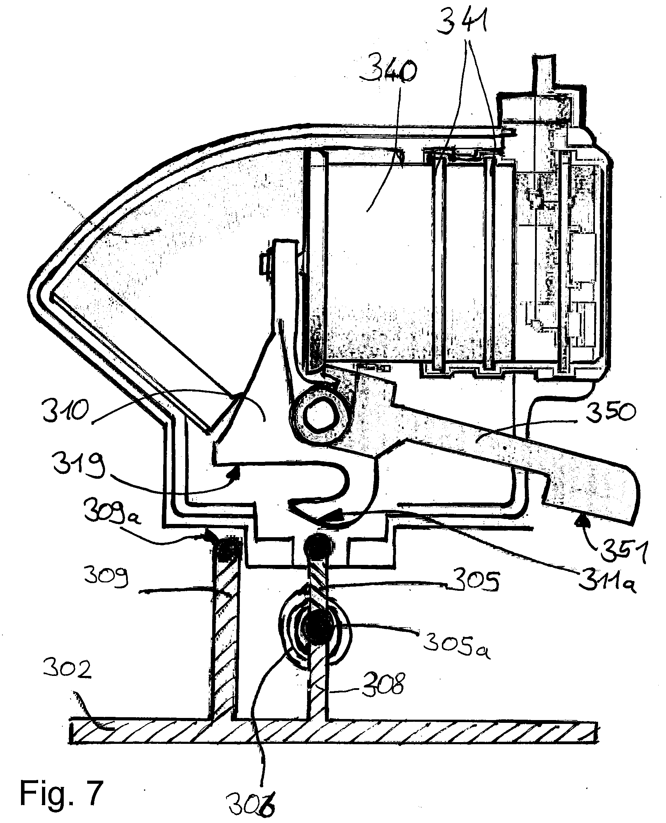

Figure 7 shows an embodiment according to the invention which is further equipped with a reset pin when compared to the third example shown in figures 4-6. As can be seen, the embodiment is similar to the third example with two particular exceptions.

A first difference lies in the design of the locking lever. The embodiment according to the invention comprises a locking lever 305 which is pivotally mounted to a projection 308 which is integral with the cover lid 302. A spiral spring 306 is arranged around said pivotal coupling to force said locking lever 305 in a clockwise direction. The arrangement and functionality of the locking lever 305, the spiral spring 306 and the pivotal movement of said locking lever 305 allows a functionality of closing the cover lid 302 if the latch 310 is in the first, locking position in the same way like the third example. A second difference of the embodiment according to the invention is a reset pin 309 which is connected to the cover lid 302. The reset pin 309 extends from the cover lid 302 in the direction towards the latch 310. An upper end 309a of the reset pin 309 is arranged opposite to a reset face 319 of the latch 310. The upper end 309a of the reset pin 309 comes into contact with said reset face 319 of the latch if the latch is in the second unlocking position and the cover lid 302 is pushed into the closed position. This contact between the upper end 309a and the reset face 319 applies a force onto the latch 310 which effects a rotation of said latch 310 in a clockwise direction. By this, the reset pin 309 moves the latch 310 from the second unlocking position into the first locking position if the cover lid 302 is moved from the open position into a closed position.

The embodiment according to the invention therefore allows to close the cover lid 302 and lock the cover lid 302 in the closed position even if initially the latch 310 is in the second unlocking position.

## Claims

1. An emergency oxygen supply device for aircraft inhabitants, comprising
- an oxygen source,
- an oxygen mask connected via an oxygen line to said oxygen source,
- a container, wherein said oxygen mask is positioned inside said container,
- a releasable cover lid (2, 102, 202, 302) mounted to the container to close an opening of said container in a first position of said cover lid (2, 102, 202, 302) and to open said opening in a second position,
- a latch mechanism mounted to said container, said latch mechanism comprising a latch (10, 110, 210, 310) which is switchable from a first position wherein said latch (10, 110, 210, 310) holds said cover lid (2, 102, 202, 302) in the closed position to a second position wherein said latch (10, 110, 210, 310) gives free the cover lid (2, 102, 202, 302) to move into the open position,
whereby said latch mechanism comprises a permanent magnet (40, 140, 240, 340) interacting with a magnetisable element (16, 116, 216) and exerting a magnetic holding force onto said magnetisable element (16, 116, 216) to hold said latch (10, 110, 210, 310) in the first position, wherein a solenoid (41, 141, 241, 341) is positioned adjacent to the permanent magnet (40, 140, 240, 340), said solenoid (41, 141, 241, 341) being connected to a control unit, said control unit being adapted to receive an opening signal and to provide a current flowing through said solenoid (41, 141, 241, 341) in response to such opening signal, wherein said solenoid (41, 141, 241, 341) is arranged and dimensioned such that the current flowing through said solenoid (41, 141, 241, 341) reduces said magnetic holding force to such a level that the latch (10, 110, 210, 310) is released in the second position, wherein the latch (10, 110, 210, 310) comprises a locking element with two legs (11, 12, 111, 112, 211, 212) which delimit a recess (13, 113, 213), the lower leg (11, 111, 211) having a bottom face (211a, 311a) which is oriented oblique to the direction of movement of the cover lid for providing a wedge-like effect onto a locking lever (305),
the locking lever (305) being pivotally mounted to a projection (308) which is integral with the cover lid (302), a spiral spring (306) is arranged around said pivotal coupling to force said locking lever (305) in a clockwise direction, **characterized by**
a reset pin (309) which is connected to the cover lid (302), the reset pin (309) extending from the cover lid (302) in a direction towards the latch (310), an upper end (309a) of the reset pin (309) being arranged opposite to a reset face (319) of the latch (310) for coming into contact with said reset face (319) of the latch if the latch is in the second unlocking position and the cover lid (302) is pushed into the closed position for thereby moving the latch (310) from the second unlocking position into the first locking position if the cover lid (302) is moved from the open position into a closed position.

2. Oxygen supply device according to claim 1, wherein said permanent magnet (40, 140, 240, 340) and said solenoid (41, 141, 241, 341) is fixed to a wall of said container and said magnetisable element (16, 116, 216) is fixed to said latch (10, 110, 210, 310).

3. Oxygen supply device according to claim 1, wherein said latch (10, 110, 210, 310) is mounted swivable to said container.

4. Oxygen supply device according to claim 1, wherein said latch (10, 110, 210, 310) comprises a recess (13, 113, 213) or a projection interacting with a section of the cover lid (2, 102, 202, 302) in the closed position to hold said cover lid (2, 102, 202, 302) in the closed position, said recess (13, 113, 213) or projection being positioned such that an opening force is applied to said latch (10, 110, 210, 310) forcing said latch (10, 110, 210, 310) into the second position by the force of gravity exerted by the cover lid (2, 102, 202, 302) onto said latch (10, 110, 210, 310) in the closed position, wherein said holding force holds the latch (10, 110, 210, 310) in said first position against said force of gravity.

5. Oxygen supply device according to claim 1, wherein said latch (10, 110, 210, 310) comprises a lever (14, 114, 214) and said magnetisable element (16, 116, 216) is mounted to said lever (14, 114, 214).

6. Oxygen supply device according to claim 1, wherein said latch mechanism comprises a spring (150) exerting a spring force onto said lever (114) forcing said lever (114) into the second position, wherein said holding force holds the latch (110) in said first position against said spring force.

7. Oxygen supply device according to claim 1, further comprising a switch which is actuated by the cover lid in the open position or the latch in the second position, wherein said switch interrupts the current flow through said solenoid if said switch is actuated.

8. A method of providing oxygen to passenger of an aircraft, comprising the steps:
- storing oxygen masks in a container above the passenger seat,
- said container comprising a cover lid (2, 102, 202, 302) holding said oxygen mask in said container in a closed position,
- wherein said cover lid (2, 102, 202, 302) is held in said closed position by a latch (10, 110, 210, 310) in a first position,
- releasing said oxygen mask out of said container by moving said latch (10, 110, 210, 310) in a second position, wherein said cover lid (2, 102, 202, 302) is no longer held in the closed position and moves into an open position,
whereby said latch (10, 110, 210, 310) is held in said first position by holding force exerted by a permanent magnet (40, 140, 240, 340) to a magnetisable element (16, 116, 216) mounted to said latch (10, 110, 210, 310) and said latch (10, 110, 210, 310) is moved into the second position by supplying a current to a solenoid (41, 141, 241, 341) and thereby reducing or eliminating the holding force of said permanent magnet (40, 140, 240, 340), wherein the latch (10, 110, 210, 310) comprises a locking element with two legs (11, 12, 111, 112, 211, 212) which delimit a recess (13, 113, 213), the lower leg (11, 111, 211) having a bottom face (211a, 311a) which is oriented oblique to the direction of movement of the cover lid for providing a wedge-like effect onto a locking lever (305),
the locking lever (305) being pivotally mounted to a projection (308) which is integral with the cover lid (302), a spiral spring (306) is arranged around said pivotal coupling to force said locking lever (305) in a clockwise direction, **characterized in that**
a reset pin (309) is connected to the cover lid (302), the reset pin (309) extending from the cover lid (302) in a direction towards the latch (310), an upper end (309a) of the reset pin (309) being arranged opposite to a reset face (319) of the latch (310) for coming into contact with said reset face (319) of the latch if the latch is in the second unlocking position and the cover lid (302) is pushed into the closed position for thereby moving the latch (310) from the second unlocking position into the first locking position if the cover lid (302) is moved from the open position into a closed position.

## Patentansprüche

1. Notfall-Sauerstoffzuführvorrichtung für Luftfahrzeuginsassen, aufweisend
- eine Sauerstoffquelle,
- eine Sauerstoffmaske, die über eine Sauerstoffleitung mit der Sauerstoffquelle verbunden ist,
- einen Behälter, wobei die Sauerstoffmaske in dem Behälter positioniert ist,
- einen lösbaren Verschlussdeckel(2, 102, 202, 302), der an den Behälter montiert ist, um eine Öffnung des Behälters in einer ersten Position des Verschlussdeckels (2, 102, 202, 302) zu verschließen und die Öffnung in einer zweiten Position zu öffnen,
- einen Verriegelungsmechanismus, der an dem Behälter angebracht ist, wobei der Verriegelungsmechanismus aufweist einen Riegel (10, 110, 210, 310), welcher schaltbar ist von einer ersten Position, in welcher der Riegel (10, 110, 210, 310) den Verschlussdeckel (2, 102, 202, 302) in der Geschlossen-Position hält, in eine zweite Position, in welcher der Riegel (10, 110, 210, 310) den Verschlussdeckel (2, 102, 202, 302) freigibt zum sich Bewegen in die Offen-Position, wobei der Verriegelungsmechanismus einen Permanentmagnet (40, 140, 240, 340) aufweist, der mit einem magnetisierbaren Element (16, 116, 216) zusammenwirkt und eine magnetische Haltekraft auf das magnetisierbare Element (16, 116, 216) ausübt, um den Riegel (10, 110, 210, 310) in der ersten Position zu halten, wobei ein Elektromagnet (41, 141, 241, 341) benachbart zu dem Permanentmagnet (40, 140, 240, 340) positioniert ist, wobei der Elektromagnet (41, 141, 241, 341) mit einer Steuereinheit verbunden ist, wobei die Steuereinheit angepasst ist, um ein Öffnen-Signal zu empfangen und um einen Strom bereitzustellen, der durch den Elektromagnet (41, 141, 241, 341) fließt, in Antwort auf ein solches Öffnen-Signal, wobei der Elektromagnet (41, 141, 241, 341) derart eingerichtet und dimensioniert ist, dass der Strom, der durch den Elektromagnet (41, 141, 241, 341) fließt, die magnetische Haltekraft auf solch ein Niveau reduziert, dass der Riegel (10, 110, 210, 310) in die zweite Position freigegeben wird, wobei der Riegel (10, 110, 210, 310) ein Verriegelungselement mit zwei Schenkeln (11, 12, 111, 112, 211, 212) aufweist, welches eine Aussparung (13, 113, 213) begrenzt, wobei der untere Schenkel (11, 111, 211) eine untere Fläche (211a, 311a) hat, die zu der Bewegungsrichtung des Verschlussdeckels schräg ausgerichtet ist zum Bereitstellen einer keilartigen Wirkung auf einen Verriegelungshebel (305),
wobei der Verriegelungshebel (305) schwenkbar an einem Vorsprung (308) angebracht ist, welcher mit dem Verschlussdeckel (302) einstückig ist, wobei eine Spiralfeder (306) um die Schwenkverbindung herum angeordnet ist, um den Verriegelungshebel (305) in einer Uhrzeigersinn-Richtung vorzuspannen,
**gekennzeichnet durch**
einen Rücksetz-Stift (309), welcher mit dem Verschlussdeckel (302) verbunden ist, wobei der Rücksetz-Stift (309) sich von dem Verschlussdeckel (302) aus in eine Richtung zu dem Riegel (310) hin erstreckt, wobei ein oberes Ende (309a) des Rücksetz-Stifts (309) gegenüberliegend zu einer Rücksetz-Fläche (319) des Riegels (310) angeordnet ist zum In-Kontakt-Kommen mit der Rücksetz-Fläche (319) des Riegels, falls der Riegel in der zweiten, entriegelnden Position ist und der Verschlussdeckel (302) in die Geschlossen-Position gedrückt wird zum dadurch Bewegen des Riegels (310) von der zweiten, entriegelnden Position in die erste, verriegelnde Position, falls der Verschlussdeckel (302) von der Offen-Position in eine Geschlossen-Position bewegt wird.

2. Sauerstoffzuführvorrichtung gemäß Anspruch 1,
wobei der Permanentmagnet (40, 140, 240, 340) und der Elektromagnet (41, 141, 241, 341) an einer Wand des Behälters fixiert ist und das magnetisierbare Element (16, 116, 216) an dem Riegel (10, 110, 210, 310) fixiert ist.

3. Sauerstoffzuführvorrichtung gemäß Anspruch 1,
wobei der Riegel (10, 110, 210, 310) schwenkbar an dem Behälter angebracht ist.

4. Sauerstoffzuführvorrichtung gemäß Anspruch 1,
wobei der Riegel (10, 110, 210, 310) eine Aussparung (13, 113, 213) oder einen Vorsprung aufweist, die/der mit einem Abschnitt des Verschlussdeckels (2, 102, 202, 302) in der Geschlossen-Position zusammenwirkt, um den Verschlussdeckel (2, 102, 202, 302) in der Geschlossen-Position zu halten, wobei die Aussparung (13, 113, 213) oder der Vorsprung derart positioniert ist, dass eine Öffnungs-Kraft auf den Riegel (10, 110, 210, 310) ausgeübt wird, welche den Riegel (10, 110, 210, 310) in die zweite Position zwingt durch die Schwerkraft, die von dem Verschlussdeckel (2, 102, 202, 302) auf den Riegel (10, 110, 210, 310) in der Geschlossen-Position ausgeübt wird, wobei die Haltekraft den Riegel (10, 110, 210, 310) in der ersten Position gegen die Schwerkraft hält.

5. Sauerstoffzuführvorrichtung gemäß Anspruch 1,
wobei der Riegel (10, 110, 210, 310) einen Hebel (14, 114, 214) aufweist und das magnetisierbare Element (16, 116, 216) an dem Hebel (14, 114, 214) angebracht ist.

6. Sauerstoffzuführvorrichtung gemäß Anspruch 1,
wobei der Verriegelungsmechanismus eine Feder (150) aufweist, die eine Federkraft auf den Hebel (114) ausübt, die den Hebel (114) in die zweite Position zwingt, wobei die Haltekraft den Riegel (110) gegen die Federkraft in der ersten Position hält.

7. Sauerstoffzuführvorrichtung gemäß Anspruch 1,
ferner aufweisend einen Schalter, welcher von dem Verschlussdeckel in der Offen-Position oder dem Riegel in der zweiten Position betätigt wird, wobei der Schalter den Stromfluss durch den Elektromagnet hindurch unterbricht, falls der Schalter betätigt wird.

8. Verfahren zum Bereitstellen von Sauerstoff an Passagiere eines Luftfahrzeugs, aufweisend die Schritte:
- Aufbewahren von Sauerstoffmasken in einem Behälter über dem Passagiersitz,
- wobei der Behälter einen Verschlussdeckel (2, 102, 202, 302) aufweist, der in einer Geschlossen-Position die Sauerstoffmaske in dem Behälter hält,
- wobei der Verschlussdeckel (2, 102, 202, 302) in der Geschlossen-Position gehalten wird durch einen Riegel (10, 110, 210, 310) in einer ersten Position,
- Freigeben der Sauerstoffmaske aus dem Behälter durch Bewegen des Riegels (10, 110, 210, 310) in eine zweite Position, wobei der Verschlussdeckel (2, 102, 202, 302) nicht länger in der Geschlossen-Position gehalten wird und sich in eine Offen-Position bewegt,
wobei der Riegel (10, 110, 210, 310) in der ersten Position gehalten wird durch eine Haltekraft, die von einem Permanentmagnet (40, 140, 240, 340) auf ein magnetisierbares Element (16, 116, 216) ausgeübt wird, das an dem Riegel (10, 110, 210, 310) angebracht ist, und der Riegel (10, 110, 210, 310) in die zweite Position bewegt wird durch Zuführen eines Stroms an einen Elektromagnet (41, 141, 241, 341) und dadurch Reduzieren oder Eliminieren der Haltekraft des Permanentmagnet (40, 140, 240, 340),
wobei der Riegel (10, 110, 210, 310) ein Verriegelungselement mit zwei Schenkeln (11, 12, 111, 112, 211, 212) aufweist, die eine Aussparung (13, 113, 213) begrenzen, wobei der untere Schenkel (11, 111, 211) eine untere Fläche (211a, 311a) hat, die zu der Bewegungsrichtung des Verschlussdeckels schräg ausgerichtet ist zum Bereitstellen einer keilartigen Wirkung auf einen Verriegelungshebel (305), wobei der Verriegelungshebel (305) schwenkbar an einem Vorsprung (308) angebracht ist, welcher mit dem Verschlussdeckel (302) einstückig ist, wobei eine Spiralfeder (306) um die Schwenkverbindung herum angeordnet ist, um den Verriegelungshebel (305) in eine Uhrzeigersinn-Richtung vorzuspannen,
**dadurch gekennzeichnet, dass**
ein Rücksetz-Stift (309) mit dem Verschlussdeckel (302) verbunden ist, wobei der Rücksetz-Stift (309) sich von dem Verschlussdeckel (302) aus in eine Richtung zu dem Riegel (310) hin erstreckt, wobei ein oberes Ende (309a) des Rücksetz-Stifts (309) gegenüberliegend zu einer Rücksetz-Fläche (319) des Riegels (310) angeordnet ist zum In-Kontakt-Kommen mit der Rücksetz-Fläche (319) des Riegels, falls der Riegel in der zweiten, entriegelnden Position ist und der Verschlussdeckel (302) in die Geschlossen-Position gedrückt wird zum dadurch Bewegen des Riegels (310) von der zweiten, entriegelnden Position in die erste, verriegelnde Position, falls der Verschlussdeckel (302) von der Offen-Position in eine Geschlossen-Position bewegt wird.

## Revendications

1. Dispositif d'alimentation en oxygène d'urgence pour des passagers d'aéronef, comprenant
- une source d'oxygène,
- un masque à oxygène raccordé via une canalisation d'oxygène à ladite source d'oxygène,
- un contenant, dans lequel ledit masque à oxygène est positionné à l'intérieur dudit contenant,
- un couvercle libérable (2, 102, 202, 302) monté sur le contenant pour fermer une ouverture dudit contenant dans une première position dudit couvercle (2, 102, 202, 302) et pour ouvrir ladite ouverture dans une seconde position,
- un mécanisme de verrou monté sur ledit contenant, ledit mécanisme de verrou comprenant un verrou (10, 110, 210, 310) qui peut passer d'une première position dans laquelle ledit verrou (10, 110, 210, 310) maintient ledit couvercle (2, 102, 202, 302) dans la position fermée à une seconde position dans laquelle ledit verrou (10, 110, 210, 310) libère le couvercle (2, 102, 202, 302) pour se déplacer dans la position ouverte,
moyennant quoi ledit mécanisme de verrou comprend un aimant permanent (40, 140, 240, 340) interagissant avec un élément magnétisable (16, 116, 216) et exerçant une force de maintien magnétique sur ledit élément magnétisable (16, 116, 216) pour maintenir ledit verrou (10, 110, 210, 310) dans la première position, dans lequel un solénoïde (41, 141, 241, 341) est positionné adjacent à l'aimant permanent (40, 140, 240, 340), ledit solénoïde (41, 141, 241, 341) étant relié à une unité de commande, ladite unité de commande étant adaptée pour recevoir un signal d'ouverture et fournir un courant parcourant ledit solénoïde (41, 141, 241, 341) en réponse à un tel signal d'ouverture,
dans lequel ledit solénoïde (41, 141, 241, 341) est agencé et dimensionné pour que le courant parcourant ledit solénoïde (41, 141, 241, 341) réduise ladite force de maintien magnétique à un niveau tel que le verrou (10, 110, 210, 310) soit libéré dans la seconde position,
dans lequel le verrou (10, 110, 210, 310) comprend un élément de blocage avec deux jambes (11, 12, 111, 112, 211, 212) qui délimitent un évidement (13, 113, 213), la jambe inférieure (11, 111, 211) ayant une face de dessous (211a, 311a) qui est orientée à l'oblique par rapport à la direction du mouvement du couvercle pour fournir un effet semblable à un coin sur un levier de blocage (305),
le levier de blocage (305) étant monté pivotant sur une saillie (308) qui est solidaire du couvercle (302), un ressort à spirale (306) est agencé autour de la liaison pivotante pour forcer ledit levier de blocage (305) dans le sens des aiguilles d'une montre, **caractérisé par**
une tige de réinitialisation (309) qui est reliée au couvercle (302), la tige de réinitialisation (309) s'étendant depuis le couvercle (302) dans une direction allant vers le verrou (310), une extrémité supérieure (309a) de la tige de réinitialisation (309) étant agencée en regard d'une face de réinitialisation (319) du verrou (310) pour venir en contact avec ladite face de réinitialisation (319) du verrou si le verrou est dans la seconde position de déblocage et que le couvercle (302) est poussé dans la position fermée pour déplacer alors le verrou (310) de la seconde position de déblocage dans la première position de blocage si le couvercle (302) est déplacé de la position ouverte dans une position fermée.

2. Dispositif d'alimentation en oxygène selon la revendication 1, dans lequel ledit aimant permanent (40, 140, 240, 340) et ledit solénoïde (41, 141, 241, 341) sont fixés à une paroi dudit contenant et ledit élément magnétisable (16, 116, 216) est fixé audit verrou (10, 110,210,310).

3. Dispositif d'alimentation en oxygène selon la revendication 1, dans lequel ledit verrou (10, 110, 210, 310) est monté tournant sur ledit contenant.

4. Dispositif d'alimentation en oxygène selon la revendication 1, dans lequel ledit verrou (10, 110, 210, 310) comprend un évidement (13, 113, 213) ou une saillie interagissant avec une section du couvercle (2, 102, 202, 302) dans la position fermée pour maintenir ledit couvercle (2, 102, 202, 302) dans la position fermée, ledit évidement (13, 113, 213) ou ladite saillie étant positionné(e) pour qu'une force d'ouverture soit appliquée audit verrou (10, 110, 210, 310) forçant ledit verrou (10, 110, 210, 310) dans la seconde position par la force de gravité exercée par le couvercle (2, 102, 202, 302) sur ledit verrou (10, 110, 210, 310) dans la position fermée, dans lequel ladite force de maintien maintient le verrou (10, 110, 210, 310) dans ladite première position contre ladite force de gravité.

5. Dispositif d'alimentation en oxygène selon la revendication 1,
dans lequel ledit verrou (10, 110, 210, 310) comprend un levier (14, 114, 214) et ledit élément magnétisable (16, 116, 216) est monté sur ledit levier (14, 114, 214).

6. Dispositif d'alimentation en oxygène selon la revendication 1,
dans lequel ledit mécanisme de verrou comprend un ressort (150) exerçant une force de ressort sur ledit levier (114) forçant ledit levier (114) dans la seconde position, dans lequel ladite force de maintien maintient le verrou (110) dans ladite première position contre ladite force de ressort.

7. Dispositif d'alimentation en oxygène selon la revendication 1,
comprenant en outre un commutateur qui est actionné par le couvercle dans la position ouverte ou le verrou dans la seconde position, dans lequel ledit commutateur interrompt le passage de courant à travers ledit solénoïde si ledit commutateur est actionné.

8. Procédé de fourniture d'oxygène à un passager d'un aéronef, comprenant les étapes de :
- stockage de masques à oxygène dans un contenant au-dessus du siège passager,
- ledit contenant comprenant un couvercle (2, 102, 202, 302) maintenant ledit masque à oxygène dans ledit contenant dans une position fermée,
- dans lequel ledit couvercle (2, 102, 202, 302) est maintenu dans ladite position fermée par un verrou (10, 110, 210, 310) dans une première position,
- libération dudit masque à oxygène dudit contenant par déplacement dudit verrou (10, 110, 210, 310) dans une seconde position, dans lequel ledit couvercle (2, 102, 202, 302) n'est plus maintenu dans la position fermée et se déplace dans une position ouverte,
moyennant quoi ledit verrou (10, 110, 210, 310) est maintenu dans ladite première position par une force de maintien exercée par un aimant permanent (40, 140, 240, 340) sur un élément magnétisable (16, 116, 216) monté sur ledit verrou (10, 110, 210, 310) et ledit verrou (10, 110, 210, 310) est déplacé dans la seconde position en fournissant un courant à un solénoïde (41, 141, 241, 341) et en réduisant ou supprimant alors la force de maintien dudit aimant permanent (40, 140, 240, 340), dans lequel le verrou (10, 110, 210, 310) comprend un élément de blocage avec deux jambes (11, 12, 111, 112, 211, 212) qui délimitent un évidement (13, 113, 213), la jambe inférieure (11, 111, 211) ayant une face de dessous (211a, 311a) qui est orientée à l'oblique par rapport à la direction du mouvement du couvercle pour fournir un effet semblable à un coin sur un levier de blocage (305),
le levier de blocage (305) étant monté pivotant sur une saillie (308) qui est solidaire du couvercle (302), un ressort à spirale (306) est agencé autour de ladite liaison pivotante pour forcer ledit levier de blocage (305) dans le sens des aiguilles d'une montre,
**caractérisé en ce que**
une tige de réinitialisation (309) est reliée au couvercle (302), la tige de réinitialisation (309) s'étendant depuis le couvercle (302) dans une direction allant vers le verrou (310), une extrémité supérieure (309a) de la tige de réinitialisation (309) étant agencée en regard d'une face de réinitialisation (319) du verrou (310) pour venir en contact avec ladite face de réinitialisation (319) du verrou si le verrou est dans la seconde position de déblocage et que le couvercle (302) est poussé dans la position fermée pour déplacer alors le verrou (310) de la seconde position de déblocage dans la première position de blocage si le couvercle (302) est déplacé de la position ouverte dans une position fermée.
